# EUROPEAN PATENT APPLICATION

(11) **EP 4 020 783 A1**
(43) Date of publication of application: **29.06.2022**
(21) Application number: 19955728.1
(22) Date of filing: 18.12.2019
(51) Int. Cl.: H02M 5/48

(54) **TRACTION CONVERTER**

(30) Priority: 11.12.2019 CN 201911267174
(71) Applicant: Zhuzhou CRRC Times Electric Co., Ltd., Zhuzhou, Hunan 412001 (CN)
(72) Inventor: LIU, Kean, Zhuzhou, Hunan 412001 (CN); LIU, Haitao, Zhuzhou, Hunan 412001 (CN); XU, Shaolong, Zhuzhou, Hunan 412001 (CN); LIU, Yongjiang, Zhuzhou, Hunan 412001 (CN); LIN, Zhenjun, Zhuzhou, Hunan 412001 (CN); TANG, Xionghui, Zhuzhou, Hunan 412001 (CN); XIA, Jing, Zhuzhou, Hunan 412001 (CN); XUE, Xin, Zhuzhou, Hunan 412001 (CN)
(74) Representative: Behr, Wolfgang
(86) International application number: PCT/CN2019/126246
(87) International publication number: WO 2021/114331

(57) **Abstract**

A traction converter, the converter comprising: at least one converter circuit (101), a charging resistor (102), a first contactor (103) and a first direct current switch (104) which are closed in a rescue output mode and a rescue input mode, and a second contactor (105) which is closed in the rescue input mode. Controlling open and closed states of the first contactor (103) and the second contactor (105) determines output of a rescue voltage or receiving of a rescue input voltage. Removing a secondary filter loop and providing being rescued functionality and rescuing functionality lowers volume and weight of a traction system, and improves traction system reliability.

## Description

This application claims priority to Chinese Patent Application No. 201911267174.3, titled "TRACTION CONVERTER", filed on December 11, 2019 with the China National Intellectual Property Administration, which is incorporated herein by reference in its entirety.

### FIELD

The present disclosure relates to the technical field of motor train unit, and in particular to a traction converter.

### BACKGROUND

With the development of science and technology, a motor train unit has become one of main transport modes in people's daily travel, and various countries in the world are vigorously developing networks of motor train units.

A motor train, during operation, may malfunction and need to receive a rescue input voltage, or may need to output a rescue voltage to another faulty motor train. However, a conventional converter does not have functions for rescuing or being rescued as above. On the other hand, a direct current link for the converter adopted in a conventional motor train is connected in a parallel manner, and the converter includes a secondary filter circuit, which lead to a complicated circuit structure. Therefore, the converter has a large weight and volume, and a failure of one component may cause the entire converter cannot be used or even cannot be rescued.

Therefore, developing a function for rescuing and a function for being rescued and eliminating the secondary filter circuit from the conventional converter are solutions need to be provided urgently.

### SUMMARY

In view of the above, a traction converter is provided in the embodiments of the present disclosure, which can solve problems of the conventional converter such as the large volume and weight, lack of a function for rescue output and a function for being rescued.

A technical solution for achieving the above objectives is provided in the embodiments of the present disclosure as follows.

A traction converter is provided according to an embodiment of the present disclosure. The traction converter includes at least one converter circuit, a charging resistor, a first contactor, a first direct current, DC, switch, and a second contactor. The first contactor and the first DC switch are configured to be turned on in a rescue output mode and a rescue input mode, and the second contactor is configured to be turned on in the rescue input mode. An input end of the converter circuit is connected to a secondary winding of a traction transformer, and an output end of the converter circuit is connected to a motor. A first end of the first contactor is connected to a first end of the second contactor, and the first end of the first contactor is connected to a positive end of a direct current link of the converter circuit via an inductor. A second end of the second contactor is connected to a second end of the first contactor via the charging resistor, and the second end of the first contactor is connected to a rescue port. A first end of the first DC switch is connected to a negative end of the direct current link of the converter circuit, and a second end of the first DC switch is grounded.

In a preferred embodiment, in a case where the traction converter includes n converter circuits, the traction converter further includes n first alternating current, AC, switches and n diverter switches. The first AC switches and the diverter switches are configured to be turned on in the rescue output mode, and each of the converter circuits corresponds to one of the first AC switches and one of the diverter switches. A first end of an m-th first AC switch is connected to a positive output end of an m-th secondary winding of the traction transformer, a second end of the m-th first AC switch is connected to a positive input end of an m-th converter circuit, and a negative input end of the m-th converter circuit is connected to a negative output end of the m-th secondary winding of the traction transformer. A first end of an m-th diverter switch is connected to the first end of the first contactor, and a second end of the m-th diverter switch is connected to a positive end of the direct current link of the m-th converter circuit via an m-th inductor, n is an integer greater than or equal to 2, and m is a positive integer less than or equal to n.

In a preferred embodiment, the traction converter further includes n AC isolating switches. Each of the converter circuits corresponds to one of the AC isolation switches, and the AC isolating switch includes one normally off switch and one normally on switch. The negative input end of the m-th converter circuit is connected to the negative output end of the m-th secondary winding of the traction transformer via an m-th AC isolating switch.

In a preferred embodiment, the traction converter further includes n second AC switches configured to be turned on in an AC mode, and n second DC switches configured to be turned on in a DC mode. Each of the converter circuits corresponds to one of the second AC switches and one of the second DC switches. A first end of an m-th second AC switch is connected to the negative input end of the m-th converter circuit, a second end of the m-th second AC switch is connected to a DC voltage, and the second end of the m-th second AC switch is connected to the negative output end of the m-th secondary winding of the traction transformer. A first end of an m-th second DC switch is connected to the DC voltage, and a second end of the m-th second DC switch is connected to the second end of the m-th diverter switch.

In a preferred embodiment, the traction converter further includes n second AC switches configured to be turned on in an AC mode, and n second DC switches configured to be turned on in a DC mode. Each of the converter circuits corresponds to one of the second AC switches and one of the second DC switches. A first end of an m-th second AC switch is connected to the negative input end of the m-th converter circuit, a second end of the m-th second AC switch is connected to a DC voltage, and the second end of the m-th second AC switch is connected to the negative output end of the m-th secondary winding of the traction transformer via the m-th AC isolating switch. A first end of an m-th second DC switch is connected to the DC voltage, and a second end of the m-th second DC switch is connected to the second end of the m-th diverter switch.

In a preferred embodiment, the traction converter further includes n first resistors and n third AC switches. The third AC switches are configured to be turned on in the AC mode, and each of the converter circuits corresponds to one of the third AC switches and one of the first resistors. A first end of an m-th third AC switch is connected to the first end of the m-th first AC switch, and a second end of the m-th third AC switch is connected to the second end of the m-th first AC switch via an m-th first resistor.

In a preferred embodiment, the traction converter further includes n second resistors and n third DC switches. The third DC switches are configured to be turned on in the DC mode, and each of the converter circuits corresponds to one of the third DC switches and one of the second resistors. A first end of an m-th third DC switch is connected to the second end of the m-th second DC switch, and a second end of the m-th third DC switch is connected to the first end of the m-th second DC switch via an m-th second resistor.

In a preferred embodiment, the converter circuit includes a four-quadrant rectifier, a supporting capacitor, and a three-phase inverter. An input end of the four-quadrant rectifier is connected to the secondary winding of the traction transformer, an output end of the four-quadrant rectifier is connected in parallel with the supporting capacitor, the supporting capacitor is connected in parallel with an input end of the three-phase inverter, and an output end of the three-phase inverter is connected with the motor.

In a preferred embodiment, the traction converter further includes n-1 fourth DC switches. A first end of an M-th fourth DC switch is connected to a second end of an M-th second AC switch, and a second end of the M-th fourth DC switch is connected to a second end of an (M+1)-th second AC switch, where M is an integer greater than or equal to 1 and less than or equal to n-1.

In a preferred embodiment, the traction converter further includes a DC fuse. The second end of the first contactor is connected to the rescue port via the DC fuse.

Based on the traction converter provided in the embodiments of the present disclosure, the traction converter includes at least one converter circuit, a charging resistor, a first contractor, a first direct current, DC, switch, and a second contactor. The first contractor and the first DC switch are configured to be turned on in a rescue output mode and a rescue input mode, and the second contactor is configured to be turned on in the rescue input mode. It is controlled to output a rescue voltage or receive a rescue input voltage by controlling an on/off state of the first contactor and the second contactor. A secondary filter circuit is eliminated, a function for being rescued and a function for rescuing are provided, a volume and weight of a traction system is reduced, and reliability of the traction system is improved.

### BRIEF DESCRIPTION OF THE DRAWINGS

In order for a clearer illustration of technical solutions in embodiments of the present disclosure or the conventional technology, drawings used in the description of the embodiments or the conventional technology are described briefly hereinafter. Apparently, the drawings described in the following illustrate only some embodiments of the present disclosure, and other drawings may be obtained by those ordinarily skilled in the art based on these drawings without any creative effort.
Figure 1 is a schematic structural diagram of a traction converter according to an embodiment of the present disclosure;
Figure 2 is a schematic structural diagram of a traction converter according to another embodiment of the present disclosure;
Figure 3 is a schematic structural diagram of a traction converter according to another embodiment of the present disclosure;
Figure 4 is a schematic structural diagram of a traction converter according to another embodiment of the present disclosure;
Figure 5 is a schematic structural diagram of a traction converter according to another embodiment of the present disclosure;
Figure 6 is a schematic structural diagram of a traction converter according to another embodiment of the present disclosure;
Figure 7 is a schematic diagram for illustrating a turn-on/turn-off operation of components of a traction converter in an AC25kV/50Hz power supply mode according to an embodiment of the present disclosure;
Figure 8 is a schematic diagram for illustrating a turn-on/turn-off operation of components of a traction converter in an AC15kV/16.7Hz power supply mode according to an embodiment of the present disclosure;
Figure 9 is a schematic diagram for illustrating a turn-on/turn-off operation of components of a traction converter in a DC3000V power supply mode according to an embodiment of the present disclosure;
Figure 10 is a schematic diagram for illustrating a turn-on/turn-off operation of components of a traction converter in a DC1500V power supply mode according to an embodiment of the present disclosure; and
Figure 11 is a schematic diagram for illustrating a turn-on/turn-off operation of components of a traction converter in a rescue output mode according to an embodiment of the present disclosure.

### DETAILED DESCRIPTION

The technical solutions in the embodiments of the present disclosure are described clearly and completely in conjunction with the drawings of the embodiments of the disclosure hereinafter. It is apparent that the described embodiments are only some, rather than all, embodiments of the present disclosure. Any other embodiments obtained by those skilled in the art based on the embodiments in the present disclosure without any creative effort shall fall within the protection scope of the present disclosure.

In this specification, terms "include", "comprise" or any other variants thereof are intended to be non-exclusive. Therefore, a process, method, article or device including a series of elements includes not only these elements but also elements that are not enumerated, or elements that are inherent to the process, method, article or device. Unless expressively limited otherwise, a process, method, article or device limited by "comprising/including a(n) ..." does not exclude existence of another identical element in such process, method, article or device.

It can be known from the background technology section that the conventional converter includes a secondary filter circuit. Since the secondary filter circuit has a complicated circuit structure, the converter has a relatively large weight and volume. In addition, a motor train during operation may malfunction and need to receive a rescue input voltage, or may need to output a rescue voltage to a faulty motor train. However, the conventional converter does not have functions for rescuing or being rescued as above.

In view of this, a traction converter is provided in an embodiment of the present disclosure. The traction converter includes: at least one converter circuit, a charging resistor, a first contactor, a first direct current, DC, switch, and a second contactor, where the first contactor and the first DC switch are configured to be turned on in a rescue output mode and a rescue input mode, and the second contactor is configured to be turned on in the rescue input mode. By controlling an on/off state of the first contactor and the second contactor, a rescue voltage is outputted or a rescue input voltage is received. A secondary filter circuit is eliminated, in order to reduce the volume and weight of a traction system, as well as provide a function for rescuing and a function for being rescued and thereby improve reliability of the traction system.

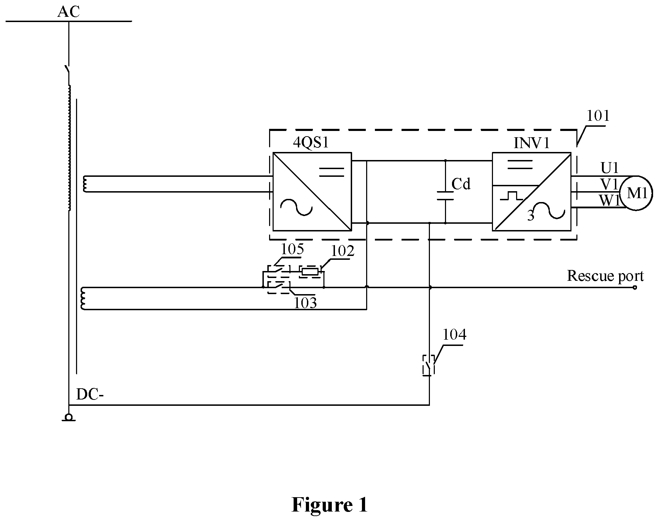

Referring to Figure 1, Figure 1 shows a schematic structural diagram of a traction converter according to an embodiment of the present disclosure, the traction converter includes at least one converter circuit 101, a charging resistor 102, a first contactor 103, a first DC switch 104, and a second contactor 105. The first contactor 103 and the first DC switch 104 are configured to be turned on in a rescue output mode and a rescue input mode, and the second contactor 105 is configured to be turned on in the rescue input mode. An input end of the converter circuit 101 is connected to a secondary winding of a traction transformer, and an output end of the converter circuit 101 is connected to a motor. A first end of the first contactor 103 is connected to a first end of the second contactor 105, and the first end of the first contactor 103 is connected to a positive end of a direct current link of the converter circuit 101 via an inductor. A second end of the second contactor 105 is connected to a second end of the first contactor 103 via the charging resistor 102, and the second end of the first contactor 103 is connected to a rescue port. A first end of the first DC switch 104 is connected to a negative end of the direct current link of the converter circuit 101, and a second end of the first DC switch 102 is grounded (which may be a rail ground).

In a preferred embodiment, the converter circuit 101 includes a four-quadrant rectifier (4QS), a supporting capacitor (Cd) and a three-phase inverter (INV).

An input end of the four-quadrant rectifier is connected to the secondary winding of the traction transformer, an output end of the four-quadrant rectifier is connected in parallel with the supporting capacitor, the supporting capacitor is connected in parallel with an input end of the three-phase inverter, and an output end of the three-phase inverter is connected with the motor.

It should be noted that a rescue input voltage inputted to the traction converter and a rescue output voltage outputted from the traction converter are both DC3000V, which is used herein as an example for illustration only. Values of the rescue input voltage and the rescue output voltage for the traction converter are not limited to DC3000V, and other values are applicable as well, which are not specifically limited herein.

It should be further noted that in a case where the traction converter is in the rescue output mode, the traction converter is connected with a rescued vehicle via the rescue port. In a case where the traction converter operates in the rescue input mode, that is, a rescued mode, the traction converter is connected with a device, inputting the rescue voltage to the traction converter, via the rescue port.

In a case where the traction converter is in the rescue input mode, the converter circuit 101 receives the rescue input voltage. A specific on/off state of components is that: the second contactor 105 is turned on, the first DC switch 104 is turned on, and the first contactor 103 is turned off. The rescue input voltage charges the direct current link of the converter circuit 101 via the charging resistor 102 and the inductor. Once a voltage of the supporting capacitor (Cd) in the converter circuit 101 rises to a preset voltage value, the first contactor 103 is turned on, the second contactor 105 is turned off, and the three-phase inverter in the converter circuit 101 is activated, so that the motor is powered on.

In a case where the traction converter is in the rescue output mode, the traction converter outputs the rescue voltage. A specific on/off state of components is that: the first contactor 103 is turned on, the first DC switch 104 is turned on, and the second contactor 105 is turned off. An input voltage of the traction transformer is inputted to the converter circuit 101 via the secondary winding, the direct current link of the converter circuit 101 outputs a rescue output voltage of DC3000V, and the rescue output voltage is transmitted to a rescued vehicle via the inductor and the first contactor 103.

In the embodiments of the present disclosure, a secondary filter circuit of the traction converter is eliminated, and the volume and weight of the traction system is effectively reduced. In addition, a function for rescue output and a function for being rescued are provided by controlling an on/off state of the components in the traction converter, and thereby reliability of the traction system is improved.

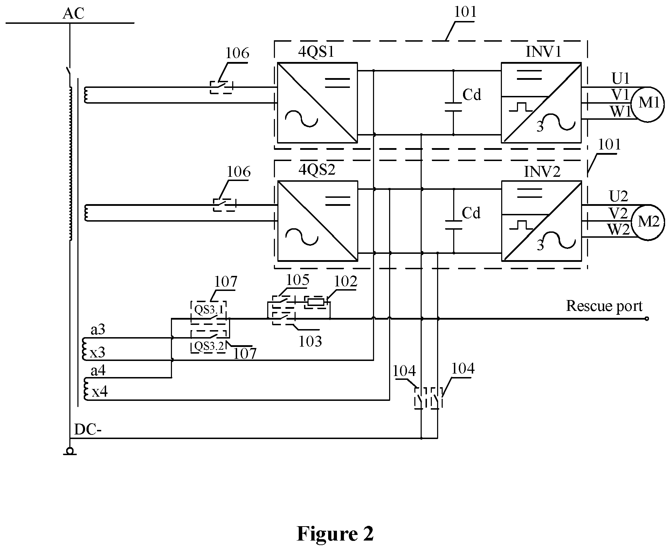

In a preferred embodiment, referring, based on Figure 1, to Figure 2, Figure 2 shows a schematic structural diagram of a traction converter according to another embodiment of the present disclosure, in a case where the traction converter includes n converter circuits 101, the traction converter further includes n first AC switches 106 and n diverter switches 107. The first AC switches 106 and the diverter switches 107 are configured to be turned on in the rescue output mode, and each converter circuit 101 corresponds to one of the first AC switches 106 and one of the diverter switches 107.

A first end of an m-th first AC switch 106 is connected to a positive output end of an m-th secondary winding of the traction transformer, a second end of the m-th first AC switch 106 is connected to a positive input end of an m-th converter circuit 101, and a negative input end of the m-th converter circuit 101 is connected to a negative output end of the m-th secondary winding of the traction transformer.

A first end of an m-th diverter switch 107 is connected to the first end of the first contactor 103, and a second end of the m-th diverter switch 107 is connected to a positive end of the direct current link of the m-th converter circuit 101 via the m-th inductor.

It should be noted that n is an integer greater than or equal to 2, and m is a positive integer less than or equal to n.

Assuming that n is equal to 2, that is, the traction converter includes two diverter switches 107, the two diverter switches 107 (QS3.1 and QS3.2) in Figure 2 may be implemented as a 2-pole diverter switch including one normally off switches and one normally on switches.

In a case where the traction converter operates in the rescue input mode, an on/off state of the diverter switches 107 may be controlled so as to control a certain converter circuit 101 to receive a rescue input voltage. For example, the m-th diverter switch 107 is turned on and other switches 107 other than the m-th diverter switch are turned off such that the m-th converter circuit 101 receives the rescue input voltage.

In the case where the traction converter operates in the rescue input mode, a specific on/off state of components is that: the m-th diverter switch 107 is turned on, the second contactor 105 and the m-th first DC switch 104 are turned on, and the first contactor 103 and other diverter switches 107 other than the m-th diverter switch are turned off.

The rescue input voltage charges the direct current link of the m-th converter circuit 101 via the charging resistor 102 and the m-th inductor. Once the voltage of the supporting capacitor in the m-th converter circuit 101 rises to a preset voltage value, the first contactor 103 is turned on, the second contactor 105 is turned off, and the three-phase inverter in the m-th converter circuit 101 is activated, so that the m-th motor is powered on.

Similarly, in a case where the traction converter operates in the rescue output mode, an on/off state of the diverter switches 107 and the first AC switches 106 may be controlled so as to control a certain converter circuit 101 to output a rescue voltage. For example, the m-th diverter switch 107 and the m-th first AC switch 106 are turned on, and other diverter switches 107 other than the m-th diverter switch and other first AC switches 106 other than the m-th first AC switch are turned off such that the m-th converter circuit 101 outputs the rescue voltage.

In the case where the traction converter operates in the rescue output mode, a specific on/off state of the components is that: the m-th first AC switch 106, the m-th diverter switch 107 and the first contactor 103 are turned on; other first AC switches 106 other than the m-th first AC switch and other diverter switches 107 other than the m-th diverter switch are turned off; and the second contactor 105 is turned off. An input voltage of the traction transformer is inputted to the m-th converter circuit 101 via the m-th secondary winding and the m-th first AC switch 106, and the direct current link of the m-th converter circuit 101 outputs a rescue output voltage of DC3000V. The rescue output voltage is transmitted to a rescued vehicle via the m-th inductor, the m-th diverter switch 107 and the first contactor 103.

In the embodiments of the present disclosure, in a case where the function for rescuing is activated for the traction converter, by controlling an on/off state of the diverter switches and the first AC switches, a certain converter circuit is controlled to receive or output a rescue voltage, and thereby an independent axial control of the traction converter is realized.

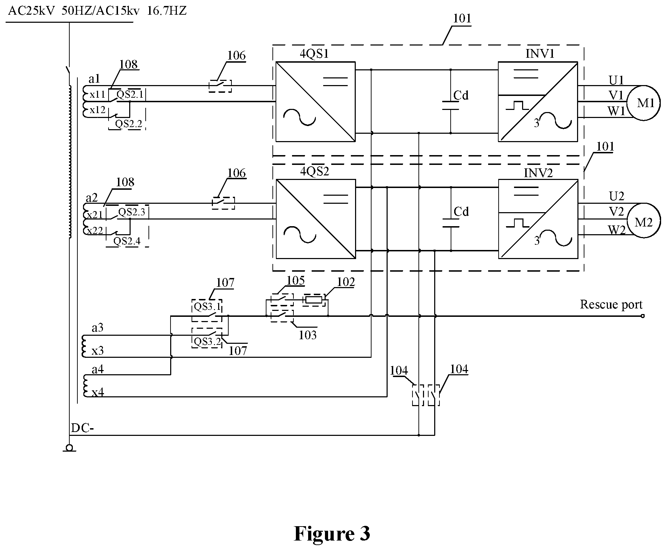

In a preferred embodiment, referring, based on Figure 2, to Figure 3, Figure 3 shows a schematic structural diagram of a traction converter according to another embodiment of the present disclosure, the traction converter further includes n AC isolating switches 108. Each converter circuit 101 corresponds to one of the AC isolating switches 108, and the AC isolating switch 108 includes one normally off switch (QS2.1 or QS2.3) and one normally on switch (QS2.2 or QS2.4).

It should be noted that an AC voltage provided by the traction transformer includes but is not limited to an AC25kV/50Hz AC voltage and AC15kV/16.7Hz AC voltage. In other words, the traction converter supplies power in an AC mode, including an AC25kV/50Hz power supply mode and an AC15kV/16.7Hz power supply mode.

The negative input end of the m-th converter circuit 101 is connected to the negative output end of the m-th secondary winding of the traction transformer via the m-th AC isolating switch 108.

It should be noted that, assuming that n is equal to 2, the positive output end of a first secondary winding corresponding to the traction transformer mentioned above is indicated as end a1 in Figure 3, and the positive output end of a second secondary winding is indicated as end a2 in Figure 3. The negative output end of the first secondary winding corresponding to the traction transformer includes x11 and x12, and the negative output end of the second secondary winding of the traction transformer includes x21 and x22.

In a case where n is equal to 2, the inductor corresponding to the traction converter is indicated as a3-x3 and a4-x4 in Figure 3.

In the AC mode, the number of the secondary winding is switched by the AC isolating switch 108, so as to achieve the AC25kV/50Hz power supply mode or AC15kV/16.7Hz power supply mode in the traction converter.

It should be further noted that a first end of the m-th AC isolating switch 108 is connected to the negative output end of the m-th secondary winding, and a second end of the m-th AC isolating switch 108 is connected to the negative input end of the m-th converter circuit 101. For the example in Figure 3, the first end of switch QS2.1 is connected to the end x11, the first end of switch QS2.2 is connected to the end x12, and the second end of switch QS2.1 and the second end of switch QS2.2 are both connected to the negative input end of the m-th converter circuit 101.

Combined with Figure 2, a rescue output voltage of DC3000V may be outputted in a case where the traction converter is in either the AC25kV/50Hz power supply mode or the AC15kV/16.7Hz power supply mode. For the on/off state of related components of the traction converter when outputting the rescue output voltage, please refer to the related content of the embodiment of the present disclosure as shown in Figure 2, which is not repeated herein.

In the embodiment of the present disclosure, by controlling a state of the AC isolating switch, the traction converter is determined to be in the AC25kV/50Hz power supply mode or the AC15kV/16.7Hz power supply mode, so as to meet power supply requirements of multiple voltage systems.

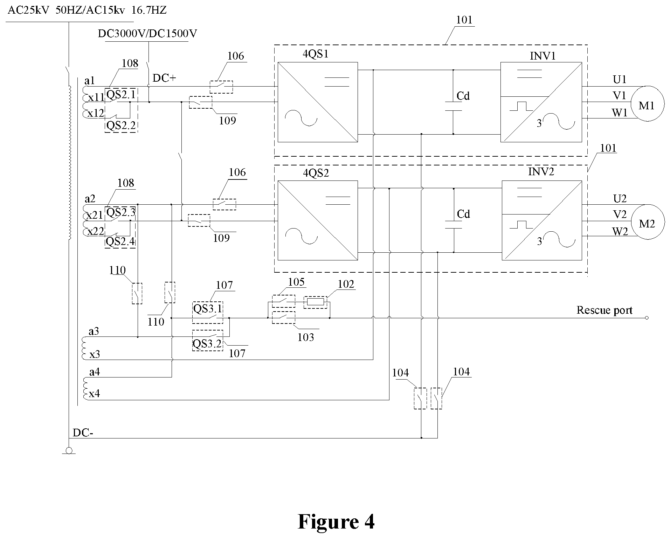

In a preferred embodiment, referring, based on Figure 3, to Figure 4, Figure 4 shows a schematic structural diagram of a traction converter according to another embodiment of the present disclosure, the traction converter further includes n second AC switches 109 configured to be turned on in an AC mode, and n second DC switches 110 configured to be turned on in a DC mode. Each converter circuit 101 corresponds to one of the second AC switches 109 and one of the second DC switches 110.

A first end of the m-th second AC switch 109 is connected to the negative input end of the m-th converter circuit 101, a second end of the m-th second AC switch 109 is connected to a DC voltage, and the second end of the m-th second AC switch 109 is connected to the negative output end of the m-th secondary winding of the traction transformer via the m-th AC isolating switch 108.

A first end of the m-th second DC switch 110 is connected to the DC voltage, and a second end of the m-th second DC switch 110 is connected to the second end of the m-th diverter switch 107.

It should be noted that the provided DC voltage includes but is not limited to a voltage of DC3000V and a voltage of DC1500V In other words, the traction converter supplies DC power in a DC mode such as a DC3000V power supply mode and a DC1500V power supply mode.

It should be further noted that connection between the m-th second DC switch 110 and the DC voltage in the embodiments of the present disclosure includes but is not limited to the following two forms.

In form 1, the first end of the m-th second DC switch 110 is directly connected to the DC voltage.

In form 2, as shown in Figure 4, the first end of the m-th second DC switch 110 is connected to the positive output end of the m-th secondary winding, such that the first end of the m-th second DC switch 110, in the DC mode, is connected to the DC voltage via the m-th secondary winding.

It can be seen from Figure 4 that the on/off state of related components may be controlled so as to select which motor is to be powered, no matter the traction converter operates in the AC mode or the DC mode. That is to say, power supply circuits for motors do not affect each other, realizing an independent axial control of the traction converter.

In a preferred embodiment, the AC mode involved in the embodiments of the present disclosure refers to a dual-standard AC mode or a multi-standard AC mode, and the DC mode refers to a dual-standard DC mode or a multi-standard DC mode. Content of the AC mode and the DC mode is not specifically limited herein.

In the embodiments of the present disclosure, the power supply mode is determined to be the AC25kV/50Hz power supply mode, the AC15kV/16.7Hz power supply mode, the DC3000V power supply mode or the DC1500V power supply mode by controlling the on/off state of related components in the traction converter, so as to meet power supply requirements under various voltages standards.

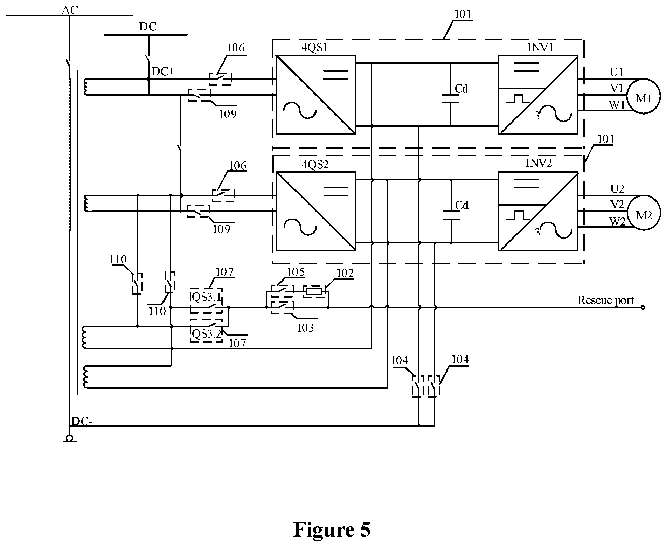

Referring, based on Figure 2, to Figure 5, Figure 5 shows a schematic structural diagram of a traction converter according to another embodiment of the present disclosure, the traction converter further includes n second AC switches 109 configured to be turned on in an AC mode, and n second DC switches 110 configured to be turned on in a DC mode. Each converter circuit 101 corresponds to one of the second AC switches 109 and one of the second DC switches 110.

A first end of the m-th second AC switch 109 is connected to the negative input end of the m-th converter circuit 101, a second end of the m-th second AC switch 109 is connected to a DC voltage, and the second end of the m-th second AC switch 109 is connected to the negative output end of the m-th secondary winding of the traction transformer.

A first end of the m-th second DC switch 110 is connected to the DC voltage, and a second end of the m-th second DC switch 110 is connected to the second end of the m-th diverter switch 107.

In the embodiment of the present disclosure, a power supply mode is determined to be the AC power supply mode or the DC power supply mode by controlling an on/off state of related components in the traction converter, so as to meet power supply requirements under various voltage standards.

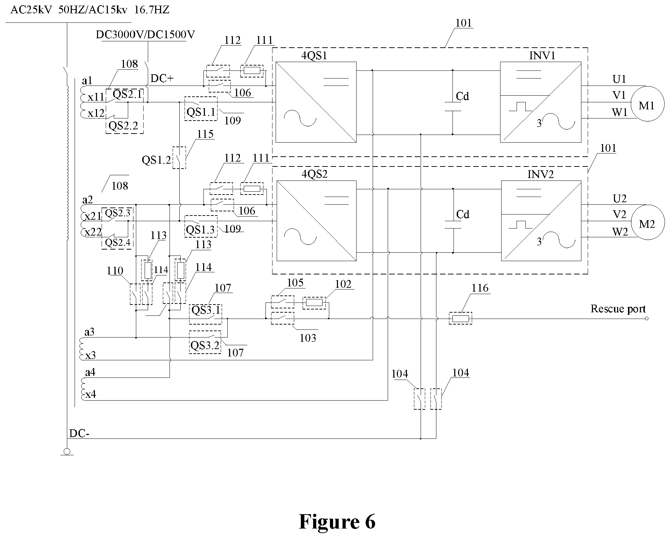

In a preferred embodiment, referring, based on Figure 4, to Figure 6, Figure 6 shows a schematic structural diagram of a traction converter according to another embodiment of the present disclosure, the traction converter further includes n first resistors 111, n third AC switches 112 configured to be turned on in the AC mode, n second resistors 113, n third DC switches 114 configured to be turned on in the DC mode, n-1 fourth DC switches 115, and a DC fuse 116. Each converter circuit 101 corresponds to one of the third AC switches 112, one of the first resistors 111, one of the third DC switches114, and one of the second resistors 113.

A first end of an m-th third AC switch 112 is connected to the first end of the m-th first AC switch 106, and a second end of the m-th third AC switch 112 is connected to the second end of the m-th first AC switch 106 via an m-th first resistor 111.

A first end of an m-th third DC switch 114 is connected to the second end of the m-th second DC switch 110, and a second end of the m-th third DC switch 114 is connected to the first end of the m-th second DC switch 110 via an m-th second resistor 113.

A first end of an M-th fourth DC switch 115 is connected to the second end of an M-th second AC switch 109, and a second end of the M-th fourth DC switch 115 is connected to a second end of the (M+1)-th second AC switch 109, where M is an integer greater than or equal to 1 and less than or equal to n-1.

Assuming that n is equal to 2, that is, the traction converter includes two second AC switches 109, the fourth DC switch 115 (QS1.2) and two second AC switches 109 (QS1.1 and QS1.3) in Figure 6 may be implemented as a 3-pole isolating switch including one normally off switch and two normally on switches. That is, when the fourth DC switch 115 is turned on, the two second AC switches 109 are turned off; and when the fourth DC switch 115 is turned off, the two second AC switches 109 are turned on.

The second end of the first contactor 103 is connected to the rescue port via the DC fuse 116.

It should be noted that, in the rescue output mode, the DC fuse 116 is disconnected in a case where a rescued vehicle has a short-circuit fault, ensuring a safe operation of the traction converter.

In the embodiments of the present disclosure, a secondary filter circuit of the traction converter is eliminated, and the volume and weight of the traction system is effectively reduced. By controlling the on/off state of the components in the traction converter, power supply requirements under various voltage standards are met, and the traction converter is provided with a function for rescue output and a function for being rescued, which improves reliability of the traction system.

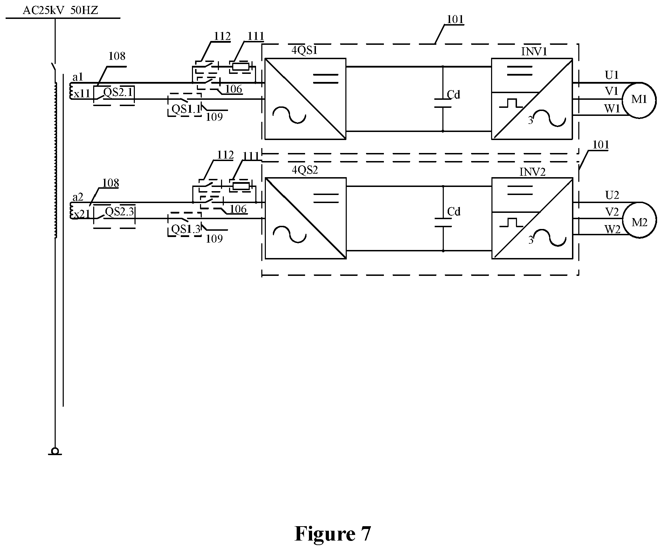

For a better illustration, one of the different power supply modes of the traction converter is illustrated by way of an example as shown in Figure 7 in conjunction with Figure 6. It should be noted that the content shown in Figure 7 is only exemplary.

Figure 7 shows a schematic diagram for illustrating a turn-on/turn-off operation of components of the traction converter in an AC25kV/50Hz power supply mode according to an embodiment of the present disclosure, where all switching components of the traction converter in Figure 6 are turned off.

The traction converter supplies power in the AC25kV/50Hz power supply mode, in which an AC voltage main circuit breaker is turned on, a DC voltage main circuit breaker is turned off, and the traction transformer is energized. The AC isolating switch 108 is switched from a normal on/off state, that is, QS2.1 and QS2.3 in Figure 6 are turned on, and QS2.2 and QS2.4 in Figure 5 are turned off. The on/off state of the first AC switch 106 and the third AC switch 112 are controlled, and the second AC switch 109 is turned on. The first AC switch 106, the third AC switch 112 and the first resistor 111 constitute a first charging circuit.

In a case where the traction converter is in the AC25kV/50Hz power supply mode, an input power through the traction transformer passes through the secondary winding (a1-x11 and a2-x21), the second AC switch 109, the first charging circuit and the converter circuit 101, to power a motor (M1 and M2). Each converter circuit 101 is completely independent and does not affect any other converter circuit 101.

It should be noted that when controlling the on/off state of the components in the first charging circuit, the third AC switch 112 is turned on, and the first AC switch 106 is turned off. Once the voltage across the supporting capacitor (Cd) in Figure 7 rises to a preset voltage value, the first AC switch 106 is turned on, and the third AC switch 112 is turned off.

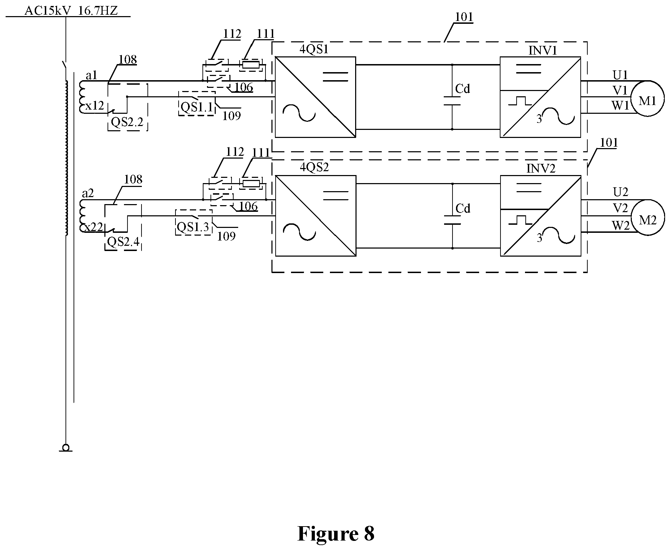

For a better illustration, one of the different power supply modes of the traction converter is illustrated by way of an example as shown in Figure 8 in conjunction with Figure 6. It should be noted that the content shown in Figure 8 is only exemplary.

Figure 8 shows a schematic diagram for illustrating a turn-on/turn-off operation of components of the traction converter in an AC15kV/16.7Hz power supply mode according to an embodiment of the present disclosure, where all switching components of the traction converter in Figure 6 are turned off.

The traction converter supplies power in the AC15kV/16.7Hz power supply mode, in which an AC voltage main circuit breaker is turned on, a DC voltage main circuit breaker is turned off, and the traction transformer is energized. The AC isolating switch 108 remains in a normal on/off state, that is, QS2.2 and QS2.4 in Figure 6 are turned on, and QS2.1 and QS2.3 in Figure 6 are turned off. The second AC switch 109 is turned on, and the on/off state of the first AC switch 106 and the third AC switch is controlled.

In a case where the traction converter is in the AC15kV/16.7Hz power supply mode, an input power through the traction transformer passes through the secondary winding (a1-x11 and a2-x21), the second AC switch 109, the first charging circuit and the converter circuit 101 to power a motor (M1 and M2). The converter circuit 101 is completely independent and does not affect any other converter circuit 101.

It should be noted that when controlling the on/off state of the components in the first charging circuit, the third AC switch 112 is turned on, and the first AC switch 106 is turned off. Once the voltage across the supporting capacitor (Cd) in Figure 8 rises to a preset voltage value, the first AC switch 106 is turned on, and the third AC switch 112 is turned off.

In the embodiments of the present disclosure, in the AC mode, the traction converter is switched, by controlling an on/off state of the AC isolating switch, to be in the AC25kV/50Hz power supply mode or the AC15kV/16.7Hz power supply mode, so as to achieve the AC voltage under different standards. Meanwhile, each converter circuit is completely independent and does not affect any other converter circuit 101, improving reliability of the traction system.

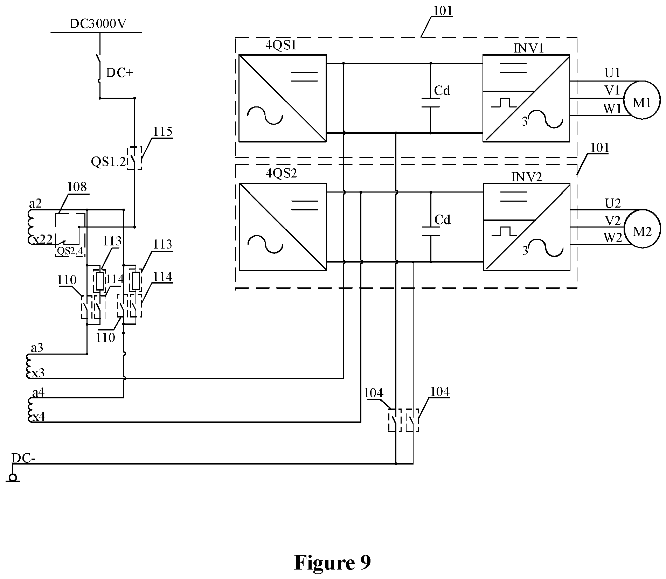

For a better illustration, one of the different power supply modes of the traction converter is illustrated by way of an example as shown in Figure 9 in conjunction with Figure 6. It should be noted that the content shown in Figure 9 is only exemplary.

Figure 9 shows a schematic diagram for illustrating a turn-on/turn-off operation of components of the traction converter in a DC3000V power supply mode according to an embodiment of the present disclosure, where all switching components of the traction converter in Figure 6 are shown open.

The traction converter supplies power in the DC3000V power supply mode, in which a DC voltage main circuit breaker is turned on, an AC voltage main circuit breaker is a turned off, and the traction transformer is de-energized. As shown in Figure 9, the AC isolating switch 108 remains in a normal on/off state, that is, QS2.4 in Figure 9 is turned on. An on/off state of the second DC switch 110 and the third DC switch 114 is controlled, and the fourth DC switch 115 and the first DC switch 104 are turned on. The second DC switch 110, the third DC switch 114 and the second resistor constitute a second charging circuit.

The input power of DC3000V passes through the fourth DC switch 115, the switch QS2.4 of the AC isolating switch 108, the secondary winding (a2-x22) of the traction transformer, the second charging circuit and two inductors (a3-x3 and a4-x4), and is inputted to a positive end of the direct current link of the converter circuit 101. A negative end of the direct current link of the converter circuit 101 is grounded via the first DC switch 104.

It should be noted that when controlling the on/off state of the components in the second charging circuit, the third DC switch 114 is turned on, and the second DC switch 110 is turned off. Once the voltage across the supporting capacitor (Cd) in Figure 9 rises to a preset voltage value, the second DC switch 110 is turned on, and the third DC switch 114 is turned off.

The input power passes through a three-phase inverters (INV1 and INV2) of the converter circuit 101 and supplies power to a motor (M1 and M2). When a converter circuit 101 fails, the failed converter circuit 101 may be isolated by disconnecting the second DC switch 110 and the third DC switch 114 corresponding to the failed converter circuit 101, so that the rest converter circuit(s) 101 without failure are not affected.

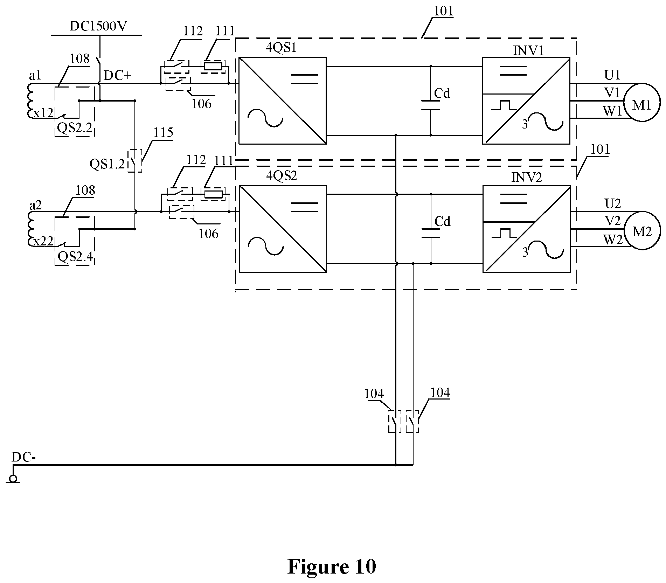

For a better illustration, one of the different power supply modes of the traction converter is illustrated by way of an example as shown in Figure 10 in conjunction with Figure 6. It should be noted that the content shown in Figure 10 is only exemplary.

Figure 10 shows a schematic diagram for illustrating a turn-on/turn-off operation of components of the traction converter in a DC1500V power supply mode according to an embodiment of the present disclosure, where all switching components for the traction converter in Figure 6 are turned off.

The traction converter supplies power in the DC1500V power supply mode, in which a DC voltage main circuit breaker is turned on, an AC voltage main circuit breaker is turned off, and the traction transformer is de-energized. The AC isolating switch 108 remains in a normal on/off state, that is, QS2.2 and QS2.4 in Figure 10 are turned on. The fourth DC switch 115 and the first DC switch 104 are turned on, and the on/off state of the first AC switch 106 and the third AC switch 112 is controlled. The first AC switch 106, the third AC switch 112 and the first resistor 111 constitute a first charging circuit.

The input power of DC1500V passes through the fourth DC switch 115, the switch QS2.2 of the AC isolating switch 108, the switch QS2.4 of the AC isolating switch 108, two secondary windings (a1-x12 and a2-x22) and the first charging circuit, and is inputted to a four-quadrant rectifier (4QS1 and Q4S2) of the converter circuit 101. The four-quadrant rectifier boosts and chops to a positive end of the direct current link of the converter circuit 101, and a negative end of the direct current link of the converter circuit 101 is grounded via the first DC switch 104.

It should be noted that when controlling the on/off state of the components in the first charging circuit, the third AC switch 112 is turned on, and the first AC switch 106 is turned off. Once the voltage across the supporting capacitor (Cd) in Figure 10 rises to a preset voltage value, the first AC switch 106 is turned on, and the third AC switch 112 is turned off.

It should be further explained that a boost and chop circuit is realized by using the secondary winding of the traction transformer and a bridge arm of the four-quadrant rectifier, in order to boost the DC1500V to DC3000V.

The input power passes through a three-phase inverter (INV1 and INV2) of the converter circuit 101 and powers a motor (M1 and M2). When a converter circuit 101 fails, the failed converter circuit 101 may be isolated by disconnecting the first AC switch 106 and the third AC switch 112 corresponding to the failed converter circuit 101, so that the rest converter circuit(s) 101 without failure are not affected.

In the embodiments of the present disclosure, in the DC mode, the traction converter is switched, by controlling the on/off state of the components of the traction converter, to be in the DC3000V power supply mode or the DC1500V power supply mode, so as to achieve the DC voltage under different standards. In addition, any faulty converter circuit can be isolated, and therefore the multiple converter circuits do not affect each other, improving reliability of the traction system.

For a better illustration of the rescue mode of the traction converter mentioned above, the on/off state of the components of the traction converter in the rescue input mode and the rescue output mode is illustrated by way of an example in conjunction with Figure 6, where all switching components of the traction converter in Figure 6 are turned off.

It should be noted that the rescue input voltage and rescue output voltage of the traction converter are both DC3000V.

In a case where the traction converter is in the rescue input mode, a certain converter circuit 101 may be controlled, by controlling an on/off state of the diverter switches 107, to receive the rescue input voltage. For example, the m-th diverter switch 107 is turned on and other diverter switches 107 other than the m-th diverter switch are turned off, so that the m-th converter circuit 101 receives the rescue input voltage.

In a case where the traction converter operates is in the rescue output mode, a certain converter circuit 101 may be controlled, by controlling the on/off state of the diverter switches 107 and the first AC switches 106, to output a rescue voltage. For example, the m-th diverter switch 107 and the m-th first AC switch 106 are turned on, and other diverter switches 107 other than the m-th diverter switch and other first AC switches 106 other than the m-th first AC switch are turned off, so that the m-th converter circuit 101 outputs the rescue voltage.

The on state of the components of the traction converter in the rescue input mode and the rescue output mode are explained below.

In a case where the traction converter is in both the DC3000V power supply mode and the rescue output mode, referring to Figure 6, the m-th second DC switch 110, the m-th diverter switch 107 and the first contactor 103 are turned on, and the rescue voltage of DC3000V is directly outputted to a rescued vehicle.

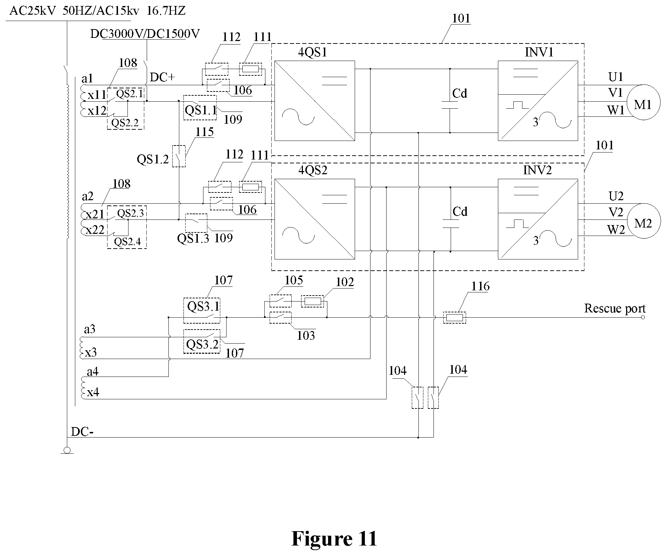

For cases where the traction converter is in the rescue output mode and one of the AC25kV/50Hz power supply mode, the AC15kV/16.7Hz power supply mode or the DC1500V power supply mode, description is made referring to Figure 11. It should be noted that the content shown in Figure 11 is only exemplary.

Figure 11 shows a schematic diagram for illustrating a turn-on/turn-off operation of components of a traction converter in the rescue input mode and the rescue output mode according to an embodiment of the present disclosure, in which all switching components of the traction converter in Figure 6 are turned off.

The first contactor 103, the m-th diverter switch 107 and the m-th first DC switch 104 are turned on. The rescue output power of DC3000V is outputted from the direct current link of the m-th converter circuit 101, and the rescue output power is transmitted to a rescued vehicle via the m-th inductor, the m-th diverter switch 107 and the first contactor 103.

It can be seen from the above that the rescue output voltage of DC3000V can be outputted to the rescued vehicle no matter the traction converter is in the DC3000V power supply mode, the AC25kV/50Hz power supply mode, the AC15kV/16.7Hz power supply mode or the DC1500V power supply mode.

In a case where the traction converter is in the rescue input mode, based on what is shown in Figure 11, the m-th diverter switch 107 is turned on to control the m-th converter circuit 101 to receive the rescue input voltage, and the m-th first DC switch 104 is turned on.

The second contactor 105 is turned on, and the direct current link of the m-th converter circuit 101 is charged via the charging resistor 102. When the voltage across the supporting capacitor (Cd) of the m-th converter circuit 101 rises to a preset voltage value, the first contactor 103 is turned on, the second contactor 105 is turned off, and therefore a three-phase inverter of the m-th converter circuit 101 is activated in order to supply power to the m-th motor.

In the embodiments of the present disclosure, the traction converter may provide the rescued vehicle with a rescue output voltage of DC3000V in a case where the traction converter is in any one of the DC3000V power supply mode, the AC25kV/50Hz power supply mode, the AC15kV/16.7Hz power supply mode and the DC1500V power supply mode. In addition, the on/off state of corresponding components may be controlled so as to control a certain converter circuit to receive the rescue input voltage. Moreover, a function for rescue output and a function for being rescued are realized for the traction converter to improve reliability of the traction system.

The embodiments in this specification are described in a progressive manner, each of the embodiments emphasizes the differences between the embodiment and other embodiments, and the same or similar parts among the embodiments may be referred to each other. Those of ordinary skill in the art may understand and implement the present disclosure without any creative effort.

Those skilled in the art may implement or practice the present disclosure based on the above descriptions of the disclosed embodiments. Various modifications to these embodiments are apparent for those skilled in the art. The general principles defined in the present disclosure may be implemented in other embodiments without departing from the spirit and scope of the present disclosure. Therefore, the present disclosure should not be limited to the embodiments disclosed herein, but conforms to the widest scope consistent with the principle and novel features disclosed in the specification.

## Claims

1. A traction converter, comprising at least one converter circuit, a charging resistor, a first contactor, a first direct current, DC, switch, and a second contactor, wherein
the first contactor and the first DC switch are configured to be turned on in a rescue output mode and a rescue input mode, and the second contactor is configured to be turned on in the rescue input mode, and wherein
an input end of the converter circuit is connected to a secondary winding of a traction transformer, and an output end of the converter circuit is connected to a motor;
a first end of the first contactor is connected to a first end of the second contactor, and the first end of the first contactor is connected to a positive end of a direct current link of the converter circuit via an inductor;
a second end of the second contactor is connected to a second end of the first contactor via the charging resistor, and the second end of the first contactor is connected to a rescue port; and
a first end of the first DC switch is connected to a negative end of the direct current link of the converter circuit, and a second end of the first DC switch is grounded.

2. The traction converter according to claim 1, wherein in a case where the traction converter comprises n converter circuits, the traction converter further comprises n first alternating current, AC, switches and n diverter switches, wherein the first AC switches and the diverter switches are configured to be turned on in the rescue output mode, and each of the converter circuits corresponds to one of the first AC switches and one of the diverter switches, and wherein
a first end of an m-th first AC switch is connected to a positive output end of an m-th secondary winding of the traction transformer, a second end of the m-th first AC switch is connected to a positive input end of an m-th converter circuit, and a negative input end of the m-th converter circuit is connected to a negative output end of the m-th secondary winding of the traction transformer; and
a first end of an m-th diverter switch is connected to the first end of the first contactor, and a second end of the m-th diverter switch is connected to a positive end of the direct current link of the m-th converter circuit via an m-th inductor;
where n is an integer greater than or equal to 2, and m is a positive integer less than or equal to n.

3. The traction converter according to claim 2, further comprising n AC isolating switches, wherein each of the converter circuits corresponds to one of the AC isolation switches, and the AC isolating switch comprises one normally off switch and one normally on switch, and wherein
the negative input end of the m-th converter circuit is connected to the negative output end of the m-th secondary winding of the traction transformer via an m-th AC isolating switch.

4. The traction converter according to claim 2, further comprising n second AC switches configured to be turned on in an AC mode, and n second DC switches configured to be turned on in a DC mode, wherein each of the converter circuits corresponds to one of the second AC switches and one of the second DC switches, and wherein
a first end of an m-th second AC switch is connected to the negative input end of the m-th converter circuit, a second end of the m-th second AC switch is connected to a DC voltage, and the second end of the m-th second AC switch is connected to the negative output end of the m-th secondary winding of the traction transformer, and
a first end of an m-th second DC switch is connected to the DC voltage, and a second end of the m-th second DC switch is connected to the second end of the m-th diverter switch.

5. The traction converter according to claim 3, further comprising n second AC switches configured to be turned on in an AC mode, and n second DC switches configured to be turned on in a DC mode, wherein each of the converter circuits corresponds to one of the second AC switches and one of the second DC switches, and wherein
a first end of an m-th second AC switch is connected to the negative input end of the m-th converter circuit, a second end of the m-th second AC switch is connected to a DC voltage, and the second end of the m-th second AC switch is connected to the negative output end of the m-th secondary winding of the traction transformer via the m-th AC isolating switch, and
a first end of an m-th second DC switch is connected to the DC voltage, and a second end of the m-th second DC switch is connected to the second end of the m-th diverter switch.

6. The traction converter according to claim 5, further comprising n first resistors and n third AC switches, wherein the third AC switches are configured to be turned on in the AC mode, and each of the converter circuits corresponds to one of the third AC switches and one of the first resistors, and wherein
a first end of an m-th third AC switch is connected to the first end of the m-th first AC switch, and a second end of the m-th third AC switch is connected to the second end of the m-th first AC switch via an m-th first resistor.

7. The traction converter according to claim 5, further comprising n second resistors and n third DC switches, wherein the third DC switches are configured to be turned on in the DC mode, and each of the converter circuits corresponds to one of the third DC switches and one of the second resistors, and wherein
a first end of an m-th third DC switch is connected to the second end of the m-th second DC switch, and a second end of the m-th third DC switch is connected to the first end of the m-th second DC switch via an m-th second resistor.

8. The traction converter according to claim 1, wherein the converter circuit comprises a four-quadrant rectifier, a supporting capacitor, and a three-phase inverter, wherein
an input end of the four-quadrant rectifier is connected to the secondary winding of the traction transformer, an output end of the four-quadrant rectifier is connected in parallel with the supporting capacitor, the supporting capacitor is connected in parallel with an input end of the three-phase inverter, and an output end of the three-phase inverter is connected with the motor.

9. The traction converter according to claim 5, further comprising n-1 fourth DC switches, wherein
a first end of an M-th fourth DC switch is connected to a second end of an M-th second AC switch, and a second end of the M-th fourth DC switch is connected to a second end of an (M+1)-th second AC switch, where M is an integer greater than or equal to 1 and less than or equal to n-1.

10. The traction converter according to any one of claims 1 to 9, further comprising a DC fuse, wherein the second end of the first contactor is connected to the rescue port via the DC fuse.
